(19) Europäisches Patentamt
European Patent Office
Office européen des brevets

(11) Publication number : **0 534 698 A2**

# (12) EUROPEAN PATENT APPLICATION

(21) Application number : **92308572.4**

(51) Int. Cl.$^5$ : **G06F 15/68**

(22) Date of filing : **21.09.92**

(30) Priority : **25.09.91 US 765645**

(43) Date of publication of application :
**31.03.93 Bulletin 93/13**

(84) Designated Contracting States :
**DE FR GB**

(71) Applicant : **International Business Machines Corporation**
**Old Orchard Road**
**Armonk, N.Y. 10504 (US)**

(72) Inventor : **Krantz, A. Steven**
**11315 NW 10th Place**
**Coral Springs, Florida 33071 (US)**

(74) Representative : **Blakemore, Frederick Norman**
**IBM United Kingdom Limited Intellectual Property Department Hursley Park**
**Winchester Hampshire SO21 2JN (GB)**

## (54) Method and system for performing anti-aliasing in a visual image.

(57) A neural network is provided and utilised to learn a relationship between a brightness and/or colour of a selected picture element and the brightness and/or colour of the surrounding picture elements. If the neural network determines that anti-aliasing would enhance the overall clarity of the graphic image the neural network then computes a scaling factor which is utilised to modify the brightness and/or colour of a selected picture element to achieve anti-aliasing. In the depicted embodiment of the present invention, a single picture element of a three by three matrix of nine picture element is modified, as required, to blur the jagged edge of a graphic image with respect to a graphic displayed in a computer system.

EP 0 534 698 A2

**1. Technical Field:**

The present invention relates in general to the display of images and in particular to a method for anti-aliasing images displayed in a raster format. Still more particularly, the present invention relates to a method and apparatus for utilizing a neural network to perform an anti-aliasing function on computer images.

**2. Description of the Related Art:**

Visual display clarity is a common problem faced by computer system developers. Graphics, including the set of textual characters, are typically displayed utilizing a raster image. A raster image is a rectangular array of picture elements known as pixels or pels. Such pixels are generally arranged on a computer display screen in a series of rows and columns.

An image clarity problem occurs when a continuous image is displayed utilizing discrete pixels. A problem is most visible in the non-vertical and non-horizontal portions of a graphic image. For example, a line which is neither vertical nor horizontal will appear jagged or stair-stepped due to the fact that the line is constructed of pixels laid out in a rectangular array of rows and columns. This particular problem is referred to as "aliasing."

One known method of solving this aliasing problem is to utilize a display with a greater number of pixels per square inch. With a higher resolution display, the resultant stair-steps are smaller, and therefore less noticeable. However, this solution is expensive in view of the high cost of high resolution displays. Additionally, this option may not always be possible in view of the limited speed capability of the electronic components utilized in conjunction with the display.

Another known method of anti-aliasing involves the modifying, or blurring of the pixels in a region of the image near the jagged edge. Blurring such jagged edges reduces the contrast and makes the aliasing problem less noticeable. In this edge blurring technique, both the brightness and color of the graphic image, and the background behind the image, may be considered when computing the new brightness and color of pixels near a jagged edge within the image. One problem with this technique is that the display must be able to generate intermediate levels of brightness and/or color.

In known systems, anti-aliasing of graphic images by blurring the jagged edges was generally accomplished by utilizing a computer algorithm. A computer would analyze a selected portion of the image to determine whether or not anti-aliasing was necessary. Once a pixel location was identified that would benefit from anti-aliasing, the computer would utilize an algorithm to compute the new parameters of the selected pixel. Visual characteristics, such as brightness and color, of surrounding pixels would then be averaged with the visual characteristics of a selected pixel. Although this algorithm works well in many cases, there is much room for refinement. For example, the process would benefit from a more analog approach such as a more flexible color averaging computation based upon less rigid criteria. Also, the process requires two computer algorithms, one to find those pixels which should be anti-aliased and a second computer algorithm to compute the new pixel color and brightness.

Neural networks have been utilized previously in image processing systems; however, such networks are generally utilized to recognize a particular image such as a human face. Recognition applications of neural networks have generally utilized pixel filtering in a manner similar to that disclosed herein; however, such applications have not attempted to improve the quality of an image for display purposes as is necessary in an anti-aliasing system.

One example of utilizing neural networks to recognize images is described in the paper *Artificial Neural Nets and Their Application to Image Processing*, by Nightingale, British Telecom Technology Journal, Volume 8, July 1990. This article focuses on the recognition of human eyes from facial images.

Another example of neural networks utilized to recognize and classify images is described in an article by Chung Lin Huang entitled *Pixels Classification With Neural Computer*, SPIE Volume 1197, Automated Inspection and High-Speed Vision Architectures III (1989). This article discusses the recognition of images which are obscured by visual noise.

It should therefore be apparent that a need exists for an improved anti-aliasing system which decreases the appearance of jagged edges in computer graphic displays which utilizes a neural network to blur such jagged edges of a graphic object with the background behind the graphic object.

SUMMARY OF THE INVENTION

It is therefore one object of the present invention to provide an improved anti-aliasing system for use in computer graphic displays.

The foregoing object is achieved as is now described. A neural network is provided and utilized to learn a relationship between a brightness and/or colour of a selected picture element and the brightness and/or colour of the surrounding picture elements. If the neural netowrk determines that anti-aliasing would enhance the overall clarity of the graphic image the neural network then computes a scaling factor which is utilized to modify the brightness and/or colour of a selected picture element to achieve anti-aliasing. In the depicted embodiment of the present invention, a single picture element of a three by three matrix of nine picture elements is modified, as required, to blur the jagged edge of a graphic image with respect to a graphic displayed in a computer system.

## BRIEF DESCRIPTION OF THE DRAWING

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:

**Figure 1** depicts a high level block diagram of the anti-aliasing system of the present invention;

**Figure 2** illustrates how a massively parallel hardware implemented neural network may be simulated on a serial VonNeumann based computer system;

**Figure 3a-3b** depict a conceptual framework of the computing environment utilized to implement the method and system of the present invention;

**Figure 4** illustrates the neural network data structure of the present invention in graphic form;

**Figures 5** through **9** depict in high level flowchart form a neural network utility which may be utilized to implement the method and system of the present invention;

**Figure 10** illustrates an example of numeric training data which may be utilized to implement the method and system of the present invention;

**Figure 11** depicts a graphic display of a computer image which may be operated upon utilizing the method and system of the present invention;

**Figure 12** depicts a magnified portion of a section of the computer display of **Figure 11** prior to performing anti-aliasing; and

**Figure 13** depicts the magnified portion of the display of **Figure 11** after anti-aliasing has been performed.

## DETAILED DESCRIPTION OF PREFERRED EMBODIMENT

With reference now to the figures and in particular with reference to **Figure 1**, there is depicted a block diagram of a computer system **10** which may be utilized to implement an anti-aliasing computer display system **5** in accordance with the method and system of the present invention. As those skilled in the art will appreciate, computer system **10** may be implemented utilizing a well-known personal computer, such as the International Business Machines Corporation PS/2 computer, or any other suitable computer. Computer system **10** preferably includes a processor **16**, keyboard **18**, and a display **19** in a manner well known to those of ordinary skill in this art.

Still referring to **Figure 1** within processor **16** of computer system **10** there is depicted a main or central processing unit (CPU) **11**, which is connected to storage means **12**. Storage means **12** may be a primary memory device, such as a random access memory (RAM) and/or a secondary memory device, such as a magnetic or optical storage unit. Main processor **11** is also preferably connected to a co-processor **13**. Co-processor **13** may provide generic math calculation functions in the manner of a well known math co-processor or may be a specialized neural network hardware support function processor (a neural network processor). Those having skill in the art will appreciate that co-processor **13** may not be necessary to implement the method and system of the present invention if main processor **11** includes sufficient processor power to handle an intensive computational work load without unacceptable performance degradation. Main processor **11** is also preferably connected to display interface **14** and utilized to control display **19** in a manner well known to those having skill in the art.

Display interface **14** preferably allows a visual image to be created and transmitted to display **19**. Display **19** is preferably utilized to receive electrical signals from display interface **14** and thereafter display a computer generated visual image within screen **20**. Display **19** may be either a color display or a monochrome display; however, in either case display **19** must be able to display several intermediate levels of brightness and/or color in order to implement the method and system of the present invention.

Thus, as depicted within **Figure 1**, computer system **10** illustrates one possible embodiment of a computer system which may be utilized to implement the present invention. If computer system **10** is implemented utilizing an International Business Machines Corporation PS/2 computer, then co-processor **13** is preferably implemented utilizing an Intel 80387 Math Co-Processor in a manner which is typically found within personal computers. In such an application, main processor **11** and co-processor **13** would then communicate via well known IBM PC support techniques.

Referring now to **Figure 2**, there is depicted the manner in which a massively parallel hardware implemented neural network may be simulated on a serial Von Neumann processor system. Those skilled in the art of neural networks will appreciate that there are many different neural network models with different connection topologies and processing unit attributes. However, such models may generally be classified as computing systems which are made up of many simple processing units **21** which each have associated therewith an adaptive or changeable weight **22**. In addition to processors and weights a neural network model must have a learning mechanism **23** which operates by updating the adaptive weights after each training iteration. As one having ordinary skill in the area of neural networks will appreciate, the training of a neural network occurs in a manner which is thought to simulate the manner in which the human brain learns. That is, when a specific input creates a desired output the weight associated with that input is increased.

Such neural network models may be simulated on a digital computer by utilizing various programs and data. Therefore, as depicted in **Figure 2**, programs **26** may be utilized to simulate the processing functions performed by neural network processing units **21** while adaptive weights **22** may be contained within data **27**. Similarly, programs **28** may be utilized to implement the learning or connection weight adaptation mechanism **23** depicted within **Figure 2**.

With reference now to **Figure 3a,** there is depicted a conceptual framework of the computing environment which may be utilized to implement the method and system of the present invention. As illustrated, at the highest level within the conceptual layout is the application program interface **31** (API). Application program interface **31** is generally a formally specified interface which permits application developers lacking expert knowledge of neural networks to access and utilize the utility programs and data structures of neural network shell **32** within their own application programs. Neural network shell **32** preferably consists of a set of utility programs **33** and a neural network data structure **50**. Neural network shell **32** provides the capability for a user to easily and efficiently define, create, train and run neural networks within applications on conventional computing systems.

Any well known neural network model, such as the example models depicted within **Figure 3a** at reference numerals **35**, **36**, **37**, and **38** may be supported by a neural network shell by defining a generic neural network data structure **50** which may be accessed by all of the utility programs within neural network shell **32**. Each neural network model is then mapped onto this generic neural network data structure, which is described in greater detail within **Figure 4**. Programs which are specific to each neural network model are then called by neural network utility programs **33**, which will be described in greater detail herein.

Referring now to **Figure 3b**, there is depicted the manner in which an anti-aliasing application program **41** may be utilized in a resultant neural network application program **40** by interfacing with one or more of the neural network utility programs **45, 46, 47** and **48** within neural network shell **32**. Utility programs **45, 46, 47** and **48** in-turn interface with data structure **50**. Data to be processed by neural network application program **40** enters the neural network on input **42**. After data is run through the neural network, the result is returned to application program **41** via connection **44**. Application program **41** and utility programs **46, 47,** and **48** preferably reside within a suitably programmed main processor such as main processor **11** and/or co-processor **13** (see **Figure 1**). Data structure **50** preferably resides within memory, such as storage **12** and/or within internal storage associated with main processor **11** and/or co-processor **13**.

With reference now to **Figure 4**, there is depicted a neural network data structure **50** which may be utilized in conjunction with the method and system for the present invention. Data structure **50** preferably provides a common framework which allows any neural network model to be defined for use in an application program. This common framework is accomplished by providing several of the fields within neural network data structure 50 to be utilized for model specific parameters. Pages 103-105 of the IBM Publication entitled *AS/400 Neural Network Utility: User's Guide and Reference PRPQ P84189*, depicts how the model specific fields of data structure **50** may be utilized by the back propagation, ART, Self-Organizing Feature Map TSP, and BAM Neural Network models.

Still referring to **Figure 4**, data structure **50** preferably consists of a header portion **60** and body portion **90**. Header portion **60** of data structure **50** preferably contains fields **61-78**. Fields **61** and **62** are pointers to other neural network data structures, if any additional structures exist. If neural network are arranged in a linked list for serial processing of data, the first pointer would then link to the previous network. This link may be utilized to obtain the outputs from a previous sub-net in the larger network which results from linking multiple neural networks. The second pointer would then be utilized as a pointer at the next network within the link. Depending upon the collection of sub-networks, either or both of these links might be utilized in a complex (hybrid) network composed of several sub-networks. Those haring skill in the art will appreciate that neural network data structures may be chained together in this manner to provide increased flexibility an function to the application program. Providing the capability of linking with additional neural networks allows "super" networks to made up of modules of smaller networks.

Field **63** within header portion **60** is utilized to specify an offset in bytes to the next free space within body portion **90**. Similarly, field **64** is utilized to specify an offset in bytes to the end of the neural network data structure. Since body portion **90** is a variable length data area, fields **63** and **64** are required in order to track the size of the data structure and the next available free space within body portion 90. Field **65** within header portion **60** is utilized to specify the name of the neural network. The name of the anti-aliasing neural network will be entered into this field. For purposes of explanation herein a neural network entitled ALIAS.NET is utilized to describe the anti-aliasing neural network which will be utilized and this name will then be placed within field **65** by the utility program which creates the neural network to be utilized herein.

Field **66** within header portion **60** preferably contains the name of the library wherein the neural network is located. Libraries, as those skilled in the art will appreciate, are similar to subdirectories in the personal computing environment. Field **66** may not be necessary if the method and system of the present invention are implemented in a computing environment which does not utilize libraries. Field **66** preferably contains the network version identifier. This information is utilized to prevent mismatches between neural network shell programs and neural network data structures. As new versions or releases of software are developed, compatibility with existing networks is highly desirable. If any enhancements to new versions or releases of software require changes to the fundamental network data structure this field permits detection of a software-to-data mismatch. Thereafter, a conversion routine may be utilized to update the data structure format, or accept down-level data structures.

Still referring to **Figure 4**, field **79** within header portion **60** is utilised to specify the name of the neural network model or type. The neural network model name utilized in a preferred embodiment of the anti-aliasing neural network disclosed herein is "*BKP" which is a Back Propagation neural network model. Next, field **68** is utilized to specify the current state of the network. Those having skill in the area of neural networks will realize that possible states include "INITIALIZE" if the network is being created, TRAINING" if the network is being trained, or "LOCKED" if training has been completed and the neural network is ready to run. Field **69** is an optional field utilized to store a model specific alphanumeric field, if so desired. Field **70** keeps track of the elapsed network training time.

Fields **71-74** contain different types of parameters which may be utilized differently by specific neural network models. For example, field 71 contains up to tour network Boolean parameters. A Back Propagation neural network model, for example, will utilize two of these parameters for determining whether EPOCH update and random input are enabled or disabled. These network Boolean parameters are also known as network flags. Of course, field **71** may be made larger or smaller to accommodate a fewer or greater number of parameters than that depicted within the present embodiment, if desired. Field **72** preferably specifies network size parameters and contains up to five model-specific network size energizer parameters. Field **73** contains up to five model-specific network index energizer parameters and field **74** contains up to six model-specific network training real parameters, such as "learn rate," "momentum" "EPOCH error," etc.

Field **75** within header portion **60** is preferably utilized to keep track of the number of training EPOCHs of the neural network. It should be appreciated that an EPOCH is a complete iteration through the set of training data. Field **76** preferably specifies an array of offsets in bytes to the start of each model-specific array within body portion **90**. Field **77** contains an array of resolved pointers to the start of each model-specific array within body portion **90**. Finally, field **78** contains an array of parameters describing the type of data held within each array. For example, certain neural models accept only binary inputs. In a preferred embodiment of the present invention, if the parameter within field **78** contains a "1" then its corresponding array contains bit mapped data. If the parameter within field **78** is a "2" then the corresponding array contains single precision floating point data. If the parameter within field **78** is "3" then the corresponding array contains fixed point zoned decimal data. These parameters may be utilized, as those having ordinary skill in the art will appreciate, to make more efficient use of storage.

Still referring to **Figure 4**, body portion of **90** of data structure **50** will now be described. Body portion **90** is preferably a variable-length data area which contains a number of model-specific arrays. The aforementioned reference to the *AS/400 Neural Network Utility: User's Guide and Reference PRPQ P84189* depicts the arrays mapped to header portions **60** and body portion **90** for each of exemplary neural network models. For example, the backup propagation model maps eleven arrays to body portion **90** including, for example: activations, weights, threshold, weight deltas and several others depicted under the heading "Array Mapping" on page 103 of the aforementioned User's Guide.

Data structure **50** is preferably created by utilizing the Create Neural Network utility program which will be described in greater detail herein. The Teach and Run utility programs access the header information contained within data structure **50** to initialize the pointers to data area arrays. The data within the data area arrays is then in turn utilized in the simulation of the neural network training and calculation processes.

**Figures 5** through **9** depict in high level flowchart form a neural network utility which may be utilized to implement the method and system of the present invention. As described above, this neural network may be implemented utilizing a suitably programmed main processor **11** and/or co-processor **13**. **Figure 5** illustrates an overview of the major steps within a neural network application program development process. The process depicted within **Figure 5** begins at block **100** and thereafter passes to block **110** which illustrates a determination of whether or not a new neural network model is to be defined. If so, block **200** illustrates the calling of the Define Neural Network Model Subroutine. If a new neural network model is not to be defined, the process then passes to block **120,** which then illustrates a determination of whether or not the user wishes to create a neural network data structure. Those skilled in the art will appreciate that each neural network requires a neural network data structure. In the event the determination depicted within block **120** is that a neural network data structure is to be created, the process passes to block **300** which illustrates the invoking of the Create Neural Network Data Structure (**Figure 7**).

In the event the determination illustrated is that neither a neural network model nor a neural network data structure is to be created, the process passes to block **130**. Block **130** illustrates a determination of whether or not the user wishes to train a neural network. Those skilled in the art will appreciate that a neural network must be trained with training data so that it may learn the relationship between input data and a desired output result, or learn to extract relevant features from the input data. If a neural network is to be trained, the process passes to block **400** which invokes the Teach Neural Network Subroutine (**Figure 8**). In the event a neural network is not to be trained, the process to block **140** which illustrates a determination of whether or not the user wishes to run a neural network. If so, the process passes to block **500**, which envokes the Run Neural Network Subroutine (see **Figure 9**). If not, the process then terminates as depicted in block **190**.

Referring now to **Figures 6a** through **6d**, the Define Neural Network Model Subroutine **200** referred to within **Figure 5** is described. For purposes of the present explanation, an anti-aliasing neural network will be defined utilizing a Back Propagation neural network model. The process then passes to block **201** which illustrates the assigning of a neural network model specific meaning to network string field **69**, if desired. In a network wherein this field is not needed, a null string may be assigned. Next, the process passes to block **202**. Block **202** depicts the assigning of a neural network specific meaning to Boolean parameters field **71** (see **Figure 4**). For the depicted embodiment of the present invention two Boolean parameters are assigned: EPOCH update N and Random Inputs Y. Next, block **203** illustrates the assigning of a neural network model specific meaning to the network size parameters depicted within field **72** of the neural network data structure depicted within **Figure 4**.

In the depicted embodiment of the present invention five parameters are assigned to the network size parameter field **72**. Specifically, the number of inputs, the number of units in hidden layer 1, the number of units within hidden layer 2, the number of outputs and the number of processing units. Of course, those skilled in the art will appreciate that an alternate number of hidden layers may be utilized to implement a specific neural network. Next, block **204** illustrates the assigning of a neural network model specific meaning to network index parameters **73**. In the depicted embodiment of the present invention, the following parameters are assigned: first hidden unit 1; last hidden unit 1; first hidden unit 2; last hidden unit 2; and first output. Next, block **205** depicts the assigning of a neural network model specific meaning to network training parameters within field **74**. In the depicted embodiment of the present invention the following parameters are assigned: learn rate; momentum; pattern error; EPOCH error; and, tolerance. Next, block **206** depicts the assigning of a neural network model specific meaning to the network array offsets listed within field **76**. Since there are eleven data arrays to be defined in a Back Propagation neural network model, this field contains the byte offset to the first element of each of the eleven arrays located within body portion 90 of data structure **50** (see **Figure 4**).

Still referring to **Figure 6a**, block **210** illustrates the calling of the Build Neural Network Model Create Program Subroutine of **Figure 6b**. Referring now to **Figure 6b**, the subroutine illustrated therein requires that model specific routines be built so that they may be executed later by the create neural network data structure subroutine (**Figure 7**). Block **211** within **Figure 6b** illustrates the providing of a simple routine to prompt the user for parameter information specific to the neural network and the checking of that information for erroneous and inconsistent parameter values. For example, block **211** may provide a routine which would prepare a screen within display **19** (see **Figure 1**) which may be utilized to prompt a user for information about parameters such as number of inputs units, number of hidden units in the first layer, number of hidden units in a second layer, and the number of output units.

Still referring to **Figure 6b**, block **212** illustrates the providing of a routine which is utilized to initialize the generic neural network data structure with default parameter values in order to create the default neural network data structure for the neural network model being created. All neural network models have the same generic neural network data structure. Each individual neural network model may have its own unique default data structure. Therefore, all neural network application programs which utilize the same neural network model (such as Back Propagation) will necessarily input unique parameter values into the same default neural network data structure.

Finally, block **213** illustrates the saving of the neural network model create program built within this subroutine by assigning a unique name and writing that program to storage **12** (see **Figure 1**). In the depicted embodiment of the present invention, this program may be written in any language desired so long as the capability of accessing the data structure is retained. Thereafter, block **219** illustrates a return to block **230** of **Figure 6a**.

Block **230** within **Figure 6a** depicts the endowing of the build neural network model teach program subroutine of **Figure 6c**. Referring therefore to **Figure 6c**, the subroutine illustrated by block **230** may be seen to require that model specific subroutines be written so that they may be executed later by the teach neural network subroutine (**Figure 8**). Block **231** illustrates the providing of a simple routine which is utilized to initialize the network array pointers within field **77** of data structure **50** within **Figure 4**. Next, block **232** provides a routine for copying network size, index and training parameters, fields **72-74** of **Figure 4**, into local variables. This is accomplished in order to improve performance and programming reliability. Block **233** then illustrates the providing of a routine to initialize the neural network. This initialization is utilized to initialize counters and variables utilized by the neural network program. If network status field **68** is "initialized," block **233** also illustrates the initialization of data array values (adaptive connection weights) and thereafter changes the status within network status field **68** from "initialize" to "training."

Still referring to **Figure 6c**, block **234** illustrates the providing of a routine to perform a single teach step for the neural network model. This routine preferably provides a mechanism which is highly dependent on the neural network model which is utilized to adjust the values of the data in the data array of body portion **90** so that the network may learn the desired functions. Those skilled in the neural network art will appreciate that a neural network description of its weight adjustment procedures may simply be converted to a computer program utilizing a computer language of choice and thereafter utilized to access the data structure in the manner described herein.

Block **235** within **Figure 6c** illustrates the providing of a routine to be performed when the training EPOCH processing has been completed. This routine may vary in complexity from a simple clean up procedure, such as resetting variables, to a more complex adjustment of data array values, dependent upon the neural network model chosen. Those skilled in the art will appreciate that the description of the manner in which EPOCH processing is completed in any other neural network model description may simply be converted to a computer program utilizing the language of choice and utilized to implement the method and system of the present invention.

Finally, block **236** illustrates the saving of the neural network model teach program constructed utilizing the subroutine of **Figure 6c** by assigning a unique name and writing that program to storage. Block **239** then illustrates the return of the program to block **250** of **Figure 6a**.

Block **250** within **Figure 6a** envokes the Build Neural Network Run Program Subroutine depicted within **Figure 6d**. Referring now to **Figure 6d,** the subroutine depicted therein requires that model specific routines be written so that they may be executed later by the run neural network subroutine depicted within **Figure 8**. Block **251** illustrates the providing of a simple routine which is utilized to initialize the network array points within field **77** of data structure **50** of **Figure 4**. Block **252** illustrates the providing of a routine for copying network size, index and training parameters into local variables for utilization within fields **72-74** of data structure **50**. Next, block **253** illustrates the provision of a routine utilized to pass input data through the neural network. Block **254** depicts the providing of a routine to return the output result to the run neural network subroutine and thereafter block **255** illustrates the saving of the neural network run program constructed in accordance with the subroutine depicted within **Figure 6d** by assigning a unique name and writing that program to storage as described above. Block **259** then returns to block **260** within **Figure 6a**.

Block **260** within **Figure 6a** illustrates the entering of the name of neural network model and the names of the create, teach and run programs for this model which have been saved as illustrated at blocks **213**, **236** and **255** into a model definition file which is saved within storage. Thereafter, block **270** returns to block **120** of **Figure 5**.

For the convenience of the developer or user multiple neural network models have been predefined. The predefined models set forth within the reference cited above are Back Propagation Adaptive Resonants Theory, Self Organizing Feature Maps, Self-Organizing TSP networks, and Bidirection Associative Memories. Therefore, these models do not have to be defined by the user when utilizing the define neural network model subroutine. The depicted embodiment of the present invention implements an anti-aliasing method and system utilizing the predefined Back Propagation model described above.

Referring again to **Figure 5**, in the event the user desires to create a neural network data structure, as illustrated within block **120**, the process passes to block **300** which illustrates the endowing of the create neural network data structure subroutine depicted within **Figure 7**. Referring initially to **Figure 7a,** block **301** therein illustrates the prompting of the user for the name of the neural network and the textual description information utilizing a suitable prompting screen. In response to such prompt, the user will enter "ALIAS4" as the name of the neural network, as described above. Block **302** then prompts the user for the name of the neural network model. As described above, the user will select "*BKP" an abbreviation for the Back Propagation neural network model. As described herein the present neural network definition file contains this model and block 330 then illustrates the endowing of the run model create program subroutine for this model, as depicted within **Figure 7b**. The model create program was prepared utilizing the build model create subroutine described above with respect to **Figure 6b.** The name of this program, along with the names of the Teach and Run programs for this model are all preferably contained within the model definition file.

Referring now to **Figure 7b**, block **331** illustrates the creation of the default neural network data structure for this neural network model by executing the routine provided within block **212** of **Figure 6b**. Next, block **332** prompts the user for neural network specific parameters, utilizing a suitable prompting screen. In the preferred embodiment of the present invention, the user may specify nine inputs units, one for each picture element. The user may also specify two hidden layers, each with nine units and one output unit or scaling factor. Of course, those skilled in the art will appreciate that a neural network having a lesser or greater number of hidden layers may also be utilized. Additionally, those skilled in the art will appreciate that a larger number of input units, such as twenty-five input units, representing a five-by-five pixel array or any other suitable square array with an odd number of pixels may be utilized. Of course, a larger number of pixels will necessarily provide an improved solution. The number of hidden layers and the number of units in each layer of the resultant neural network may be empirically determined based upon the quality of the results; however, experimentation has shown that one hidden layer with an equal number of units to the input layer can be utilized to provide sufficient computing capability to generate reasonable results.

Next are illustrated three sample lines from a training file. The first nine values within the first line represent the nine pixel grayscale values within a rectangular patch of pixels. The last, or tenth value within the line represents the desired training result that the neural network should produce. That is, a value to be substituted for the pixel of interest.

Line 1 is utilized to teach the neural network to avoid modifications of the pixel of interest when all pixel grayscale values within the array are equal. Similarly, line 2 teaches the neural network to avoid modification of the pixel of interest when all pixels are of equal grayscale value along the center row of the rectangular patch and line 3 teaches the neural network to modify the pixel of interest based upon neighboring pixel grayscale values.

| | INPUT VALUES | | | | | | | | | TRAINING VALUE |
|---|---|---|---|---|---|---|---|---|---|---|
| Line 1 | .066 | .066 | .066 | .066 | .066 | .066 | .066 | .066 | .066 | .066 |
| Line 2 | 1.00 | 1.00 | 1.00 | .266 | .266 | .266 | 1.00 | 1.00 | 1.00 | .266 |
| Line 3 | .000 | .000 | .933 | .933 | .000 | .933 | .933 | .933 | .933 | .666 |

Still referring to **Figure 7B** block **333** illustrates a determination of whether or not the user supplied parameters are acceptable. The routine illustrated within block **211** of **Figure 6B** is utilized to prompt the user for these parameters and that routine placed limits upon the users input, such as the number of output units permitted. If the user inputs a value outside of any of these ranges block **333** passes the process to block **334** which depicts the generation of an error message and the user is asked to asked to re-enter the data within, as illustrated at block **332**. Additionally, if inconsistent parameter information has provided an error message would also be posted in the depicted embodiment of the present invention. If user supplied parameters are acceptable the process passes to block **335** which illustrates the filling in of all user supplied parameters into the default data structure created at block **331**.

Next, block **336** illustrates the performance of those calculations necessary to fill in network index parameters field **73** and network array offset field **76** of data structure **50** within **Figure 4**, base on the data now residing in the data structure. Block **337** initializes the Boolean parameter within field **71** and the training parameter within field **75** to a desired set of values. Thereafter, block **338** illustrates the allocation and initialization of the data array fields located within body porting **90** of data structure **50** within **Figure 4**. In a Back Propagation neural network model the following arrays would generally be allocated: activation; weights; threshold; weight deltas; threshold deltas; teach; error; delta; network input; weight derivative; and, threshold derivative. These values are all then initialized as depicted within block **338**. Thereafter, the neural data structure will contain all of the information to teach the neural network how to perform anti-aliasing. The subroutine depicted within **Figure 7b** then returns, as depicted at block **339**, to block **305** of **Figure 7a**. Block **305** of **Figure 7a** illustrates a return to block **130** of **Figure 5**.

It should be noted that once a neural data structure has been created it may be transported to another computed system to be taught and/or run. The second computer system may be of an entirely different architecture and run entirely different operating system than the computer system which created the neural network data structure. This flexibility is possible due to the fact that the data structure contains data which may be utilized universally among different computer systems.

Referring again to **Figure 5** if the user desires to train a neural network, as illustrated at block **130** the process passes through block **400** which illustrates the invoking of the Teach Neural Network Subroutine of **Figure 8**. Referring initially to **Figure 8A** block **401** therein illustrates the prompting of the user for the name of the neural network file utilizing a suitable prompting screen. After the user enters the name of the neural network the process passes to block **402**. Block **402** illustrates a determination of whether or not the data structure specified by the user within block **401** exists. If not, an error message is posted and the user is returned to block **401**. If the data structure specified does exist block **403** illustrates the prompting of the user for the name of the data set which contains the training data. This is accomplished utilizing a suitable prompting screen and the user may then enter the data set file name.

Referring temporarily to **Figure 10** there is depicted a sample training data set which was utilized in a preferred embodiment of the present invention. Initial training data may be generated manually by referring to known methods of anti-aliasing. For example, the initial neural network training data depicted within **Figure 10** was created as follows:

(1) A set of training patterns was manually created to cover all cases where all pixels in the patch were of equal value. The desired result is no change to the pixel of interest.

(2) Patterns were manually created for cases where rows, columns or diagonals of pixels which include the pixel of interest had equal grayscale value. Again, there is the desired result of no change to the pixel of interest.

(3) A program was written which creates an arbitrary graphic grayscale image and produces a training pattern for each patch of 9 pixel which are not equivalent to those cases specified in paragraphs 1 and 2 above. The training value for the pixel of interest was computed to be the average of all grayscale values in the patch with the pixel of interest's initial value weighted at an arbitrary multiple of any other pixel within the patch.

(4) Finally, an improved training pattern generation program was created which produces two equivalent line drawings, with several short lines at arbitrary angles. The first lines are drawn utilizing a standard line drawing algorithm with every pixel at a "constant" grayscale value. The second lines are then drawn using a modified line drawing algorithm that will produce smoother lines by "changing" the grayscale value appropriately. See for example *Bresenham's Algorithm With Grayscale*, M.L.V. Pitteway and D.J. Watkinson, *Communications of the ACM*, Technical Note-Graphic and Image Processing November 1980, Volume 23, No. 11. The first "constant grayscale line pixels serve as the input pixel values for the pixel of interest. The "changing" grayscale values of the second and equivalent set of lines serve as the other neighboring values and the training value for the pixel of interest. The result of this training pattern generation program is a complete accurate set of training patterns that avoid the arbitrary weighting which is utilized in paragraph 3 above.

Referring again to **Figure 8a** since the data set depicted within **Figure 10** does exist, the process passes to block **420** which illustrates the invoking of the Run Model Teach Subroutine depicted within **Figure 8b**. The Model Teach program was prepared was prepared utilizing the Build Model Teach Program Subroutine depicted within **Figure 6c,** as discussed above.

Referring now to **Figure 8b** the Teach Model Program Subroutine begins at block **433** which illustrates the initialization routine which was constructed as illustrated in blocks **231**, **232**, and **233** of **Figure 6c**. Thereafter, the process passes to block **423** which depicts the retrieval of the data directly from the data set. Block **424** then performs one teach step by running the neural network model-dependent routine illustrated at block **234** of **Figure 6c**. In the depicted embodiment of the present invention the values of the data in the data arrays within body portion **90** of data structure **50** of **Figure 4** are adjusted to minimize the error between the desired and actual network outputs.

Referring now to **Figure 8c**, the process passes to block **49** which illustrates a determination of whether or not the user wishes to have the data logged. If so, block **430** illustrates the performing of default logging of the data. In the event the user does not desire the data to be logged or after logging the data the process passes to block **434**. Block **434** illustrates a determination of whether or not an Epoch has been completed. An Epoch is complete when all training data in the dating set has been processes once. If an Epoch has not been completed the process returns to block **421** of **Figure 8b** to obtain the next set of training data. If one Epoch has been completed block **435** illustrates the performance of the end of Epoch processing Subroutine which was illustrated within block **235** of **Figure 6c.**

In the depicted embodiment of the present invention, the end of Epoch processing routine determines if the difference of actual and desired output for the output unit for all training data is less than the specified tolerance (a parameter specified within field **74** of data structure **50**). If so, the network status within field **68** of data structure **50** is set to "locked." When the status of the neural network is "locked" the values of the data arrays are not permitted to change. The Subroutine than returns as illustrated at block **439** to block **407** of **Figure 8a**. Block **407** of **Figure 8a** then returns to block **140** of **Figure 5**. Thereafter, the anti-aliasing application program **41** depicted within **Figure 3b** may call the Run Neural Network Subroutine directly, bypassing the process depicted within **Figure 5**.

Referring now to **Figure 9a** the Run Neural Network Subroutine is illustrated. This process begins at block **501** which illustrates the initialization routine which was described with respect to blocks **251** and **252** for **Figure 6d**. Next, block **502** illustrates the determining of the name of the neural network. Block **530** then invokes the Run Model Run Program Subroutine for this model which is contained within **Figure 9b**. The Model Run Program was created as described by the Build Model Run Subroutine of **Figure 6d**, as described above.

Referring now to **Figure 9b** the Run Model Run Program Subroutine begins at block **601** which illustrates the selection of the first group of picture elements to be analyzed. for example, a first group of pixels may be selected as a block of nine pixels in a three by three patch within the upper left hand corner of a display. The center pixel in the group of nine is, as described herein, the "pixel of interest. The pixel of interest is the pixel which will be modified, if necessary, based upon its grayscale value and the value of the grayscale of the eight pixels surrounding the pixel of interest.

Block **605** within in **Figure 9b** illustrates the loading of the grayscale value for each of the nine pixels into the neural network. Thereafter, block **606** illustrates the utilization of the trained neural network to analyze the data and return a scaling factor which may be utilized to modified the grayscale value for the pixel of interest. When the neural network was trained, it determined a relationship between grayscale data and scaling factor. Thereafter, block **610** illustrates the modification of the grayscale value of the pixel of interest as a function of this scaling factor. After modifying the pixel the process passes through block **607** which illustrates the obtaining of a group of pixels which have not been analyzed. In the event the entire image has been analyzed block **650** illustrates a return to block 560 of **Figure 9b**. In the event the entire image has not been analyzed, block **625** selects the next group of nine pixels within the image and the above described process reiterates until such time as the entire image has been processed for anti-aliasing.

With reference now to **Figure 11** there is a depicted a full size view of a computer display screen including intersecting lines **701**, **702** and **703**. As depicted, line **702** is horizontal and lines **701** and **703** are skewed from horizontal at two different angles. Line **702** is composed of pixels of a lighter grayscale value than lines **701** and **703**. The area defined by rectangles **704** is shown magnified within **Figures 12** and **13**.

With reference now to **Figure 12**, there is depicted a magnified view of the computer screen which shows individual elements **705** contained within rectangle **704** of **Figure 11**. Note that the straight edge of horizontal line **702** does not present an aliasing problem and therefore it cannot be visually improved by anti-aliasing. However, the edges of diagonal line **701** and **703** are stair-stepped. The stair-stepped edges may be visually improved by the edge of blurring anti-aliasing technique described herein.

To perform an edge blurring anti-aliasing technique the neural network of the present invention is utilized to identify a pixel which, if properly modified in brightness, would make the image appear clearer, smoother and less jagged. For example, pixel **706** is a pixel which should have its grayscale value modified. Pixel **706** is located near the stair-stepped edge of line **703**, which is a dark line and the light background depicted generally at pixel **709**. If pixel **706** were changed to a brightness level between the brightness of dark pixels **707** and **708** and the brightness of light pixel **709**, line **703** would appear less jagged when viewed at normal magnification.

Finally, **Figure 13** depicts rectangle **704** after the image has been anti-aliased in accordance with the method and system with the present invention. Each pixel, including **706**, which required anti-aliasing has been located by the neural network and modified in brightness as a function of the scaling factor computed by the neural network. Note that pixel **706** now has a grayscale value which is between the grayscale value of dark pixel **707** and **708** within line **703** and light pixels **709** within the background. To compute the scaling factor used to modify pixel **706** the neural network considers the grayscale value of each of the nine pixels illustrated at reference number **710**.

Upon reference to the foregoing those skilled in the art will appreciate that the method and system of the present invention may be utilized in conjunction with a neural network to provide a rapid and accurate method of anti-aliasing computer images. While the depicted embodiment includes an analysis of a pixel patch containing nine picture elements those skilled in the art will appreciate that increasing the size of the pixel patch to 25, 49 or other squared, odd number of pixels would improve the ability of a trained neural network to deduce candidates for anti-aliasing. A squared odd number of pixels should be utilized such that a pixel of interest may be unambiguously identified. Further, alternative formulations for the neural network, such as adding or reducing the number of hidden layers, increasing or decreasing the number of units in a hidden layer may also be utilized to improve the ability of the trained network to generalize results and produce superior anti-aliased images. Finally, this technique may be utilized in either a sequential or parallel process in which each pixel of interest is addressed by a single neural network in turn or a group of pixels of interest are identified utilizing a parallel process.

## Claims

1. A method in a computer display system for performing anti-aliasing in a visual image, said method comprising the steps of:

   teaching a neural network to recognise a pattern of picture elements within a visual image requiring anti-aliasing to improve visual clarity, said visual image comprising a plurality of picture elements, each of said plurality of picture elements having at least one associated visual characteristic;

   teaching said neural network a relationship between an associated visual characteristic of a selected one of said plurality of picture elements within said image, and an associated visual characteristic of each of a selected group of said plurality of picture elements within said image;

   computing a scaling factor as a function of said learned relationship; and

   modifying said associated characteristics of said selected picture element as a function of said scaling factor to achieve anti-aliasing.

2. The method in a computer display system for performing anti-aliasing in a visual image according to claim 1 wherein said associated visual characteristic is brightness.

3. The method in a computer display system for performing anti-aliasing in a visual image according to claim 1 wherein said associated visual characteristic is colour.

4. The method in a computer displays system for performing anti-aliasing in a visual image according to claim 1, 2 or 3 wherein said selected group of picture elements comprises a square area defined by a selected number of horizontally positioned picture elements and an identical number of vertically positioned picture elements.

5. The method in a computer display system for performing anti-aliasing in a visual image according to claim 4 wherein said selected picture element is located substantially in the centre of said selected group of picture elements.

6. An anti-aliasing computer display system comprising:

   means for storing an image comprising a plurality of picture elements, each of said plurality of picture elements having at least one associated visual characteristic;

   a neural network for learning a relationship between an associated visual characteristic of a selected one of said plurality of picture elements within the said image, and said associated visual characteristic of each of a selected group of said plurality of picture elements within said image;

   means for computing a scaling factor as a function of said learned relationship;

   means for modifying said image by altering said associated characteristic of said selected picture element as a function of said scaling factor to achieve anti-aliasing; and

   means for displaying said modified image.

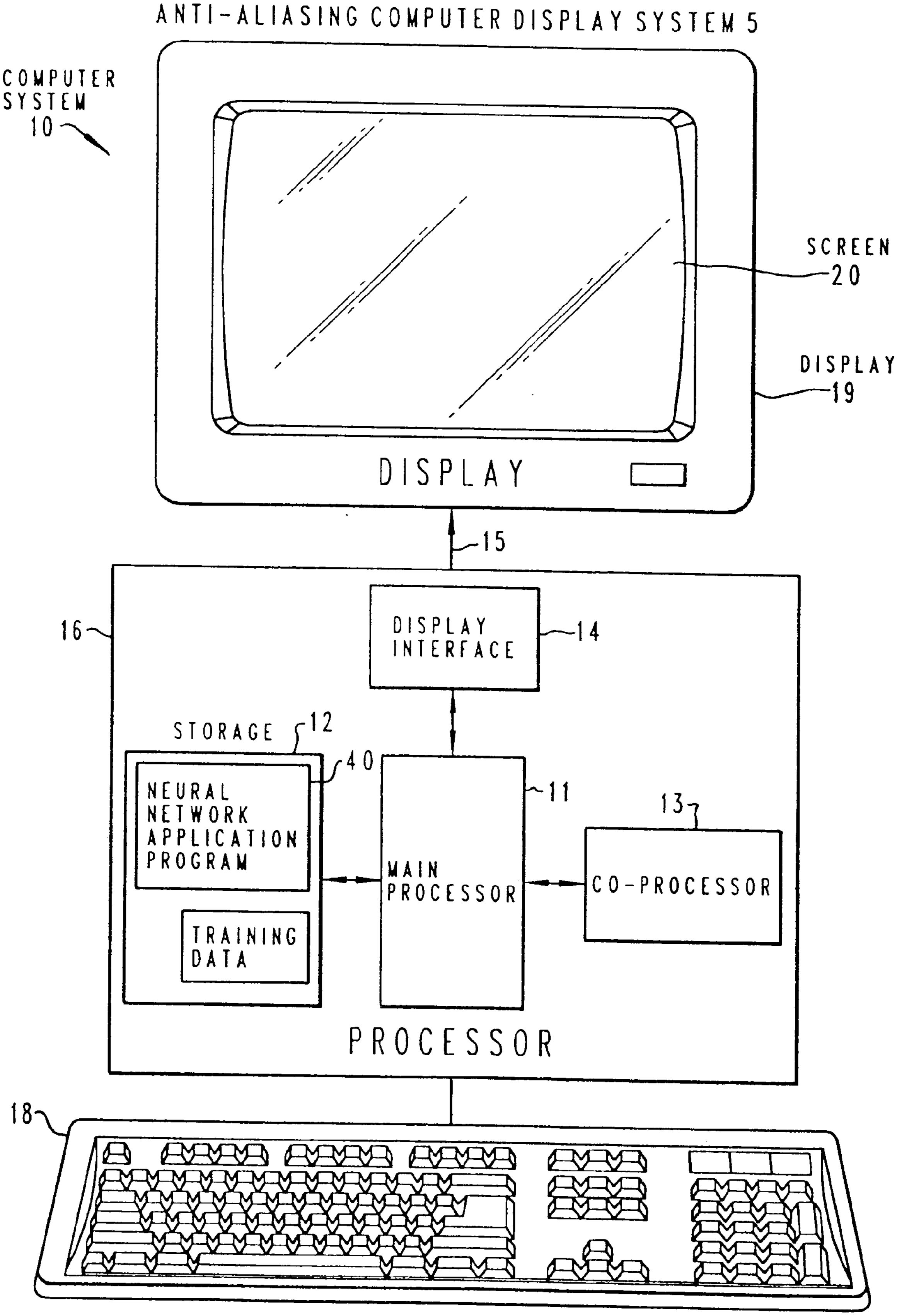
ANTI-ALIASING COMPUTER DISPLAY SYSTEM 5
COMPUTER SYSTEM 10
SCREEN 20
DISPLAY 19
DISPLAY
15
16
DISPLAY INTERFACE
14
STORAGE
12
40
NEURAL NETWORK APPLICATION PROGRAM
TRAINING DATA
11
MAIN PROCESSOR
13
CO-PROCESSOR
PROCESSOR
18

*Fig. 1*

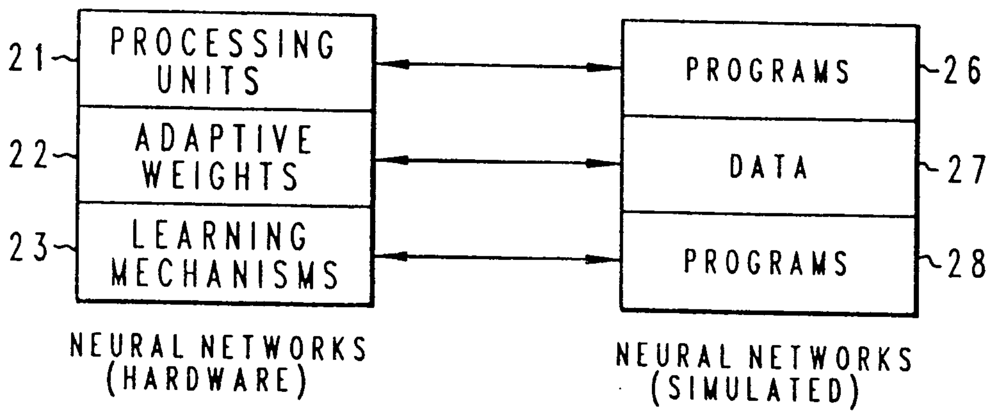
21
PROCESSING UNITS
22
ADAPTIVE WEIGHTS
23
LEARNING MECHANISMS
NEURAL NETWORKS (HARDWARE)
PROGRAMS
26
DATA
27
PROGRAMS
28
NEURAL NETWORKS (SIMULATED)

Fig. 2

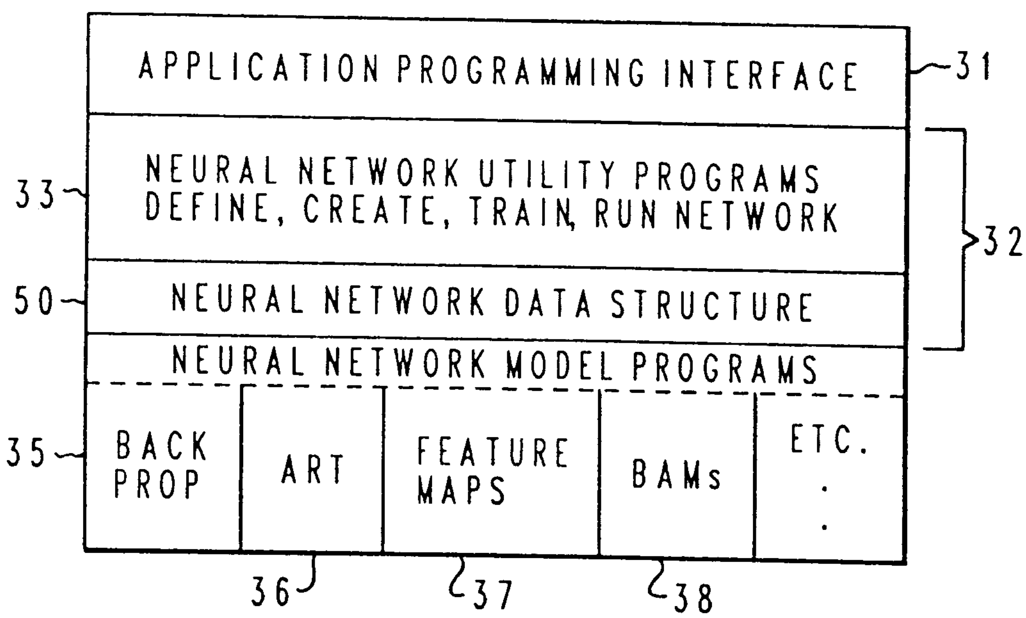
APPLICATION PROGRAMMING INTERFACE
31
33
NEURAL NETWORK UTILITY PROGRAMS
DEFINE, CREATE, TRAIN, RUN NETWORK
32
50
NEURAL NETWORK DATA STRUCTURE
NEURAL NETWORK MODEL PROGRAMS
35
BACK PROP
ART
FEATURE MAPS
BAMs
ETC.
36
37
38

Fig. 3A

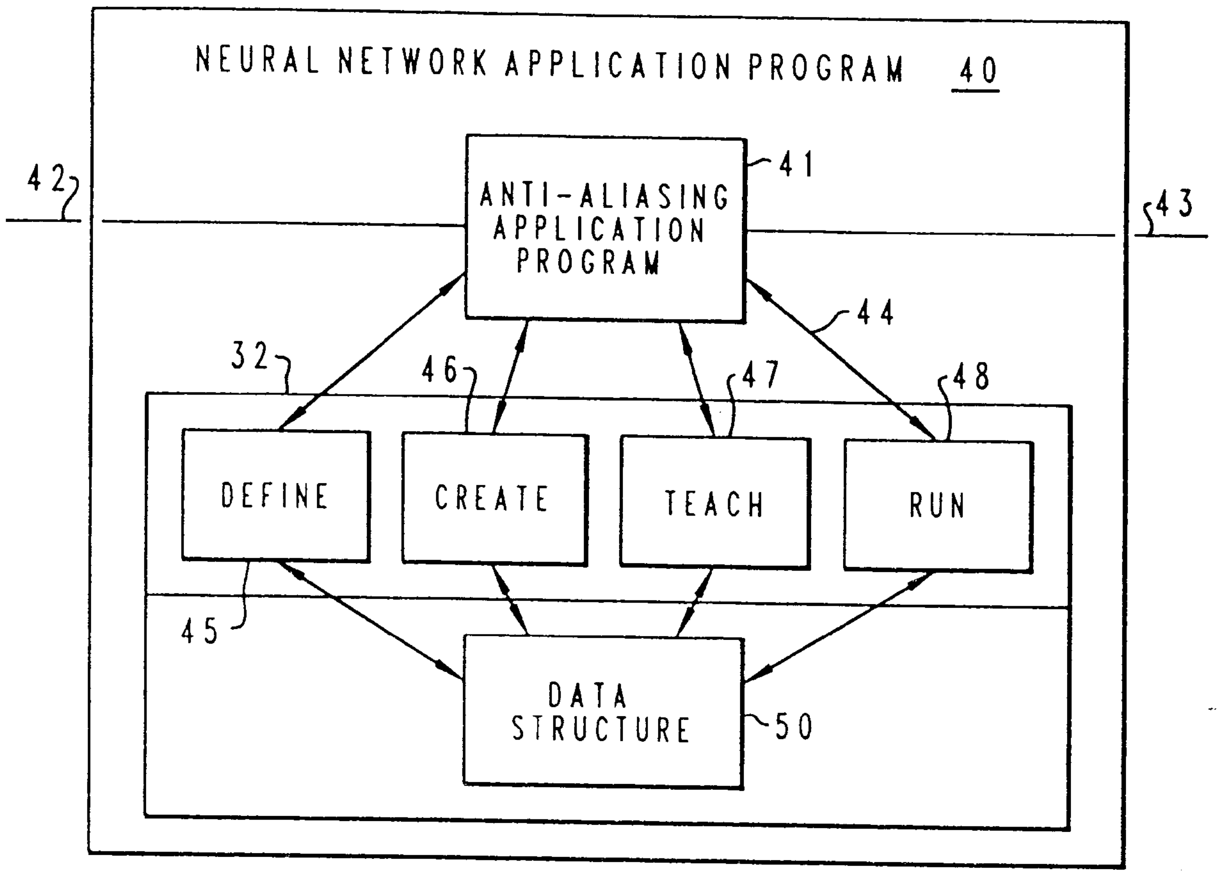
NEURAL NETWORK APPLICATION PROGRAM 40
ANTI-ALIASING APPLICATION PROGRAM
41
42
43
44
32
46
47
48
DEFINE
CREATE
TEACH
RUN
45
DATA STRUCTURE
50

*Fig. 3B*

NEURAL NETWORK DATA STRUCTURE 50

| | HEADER FIELD NAME | LENGTH | REQUIRED | |
|---|---|---|---|---|
| 61 | POINTER TO NEXT NEURAL NETWORK | 16 | N | 60 |
| 62 | POINTER TO NEXT NEURAL NETWORK | 16 | N | |
| 63 | OFFSET TO NEXT FREE SPACE | 4 | Y | |
| 64 | OFFSET TO END OF SPACE | 4 | Y | |
| 65 | NETWORK NAME | 10 | Y | |
| 66 | NETWORK LIBRARY | 10 | Y | |
| 67 | NETWORK VERSION IDENTIFIER | 10 | Y | |
| 79 | NETWORK MODEL (TYPE) | 10 | Y | |
| 68 | NETWORK STATUS | 10 | Y | |
| 69 | NETWORK STRING | 10 | N | |
| 70 | NETWORK TRAINING TIME | 10 | Y | |
| 71 | NETWORK BOOLEAN PARAMETERS (4) | 4 | N | |
| 72 | NETWORK SIZE PARAMETERS (5) | 20 | N | |
| 73 | NETWORK INDEX PARAMETERS (5) | 20 | N | |
| 74 | NETWORK TRAINING PARAMETERS (6) | 24 | N | |
| 75 | NETWORK TRAINING CYCLE COUNTER | 4 | Y | |
| 76 | NETWORK ARRAY OFFSETS (16) | 256 | Y | |
| 77 | NETWORK ARRAY POINTERS (16) | 24 | Y | |
| 78 | NETWORK ARRAY DATA TYPES (16) | 24 | Y | |
| | VARIABLE-LENGTH DATA AREA<br>ARRAY 1<br>2<br>.<br>.<br>.<br>15<br>16 | 0-16 MEG | Y | 90 |

*Fig. 4*

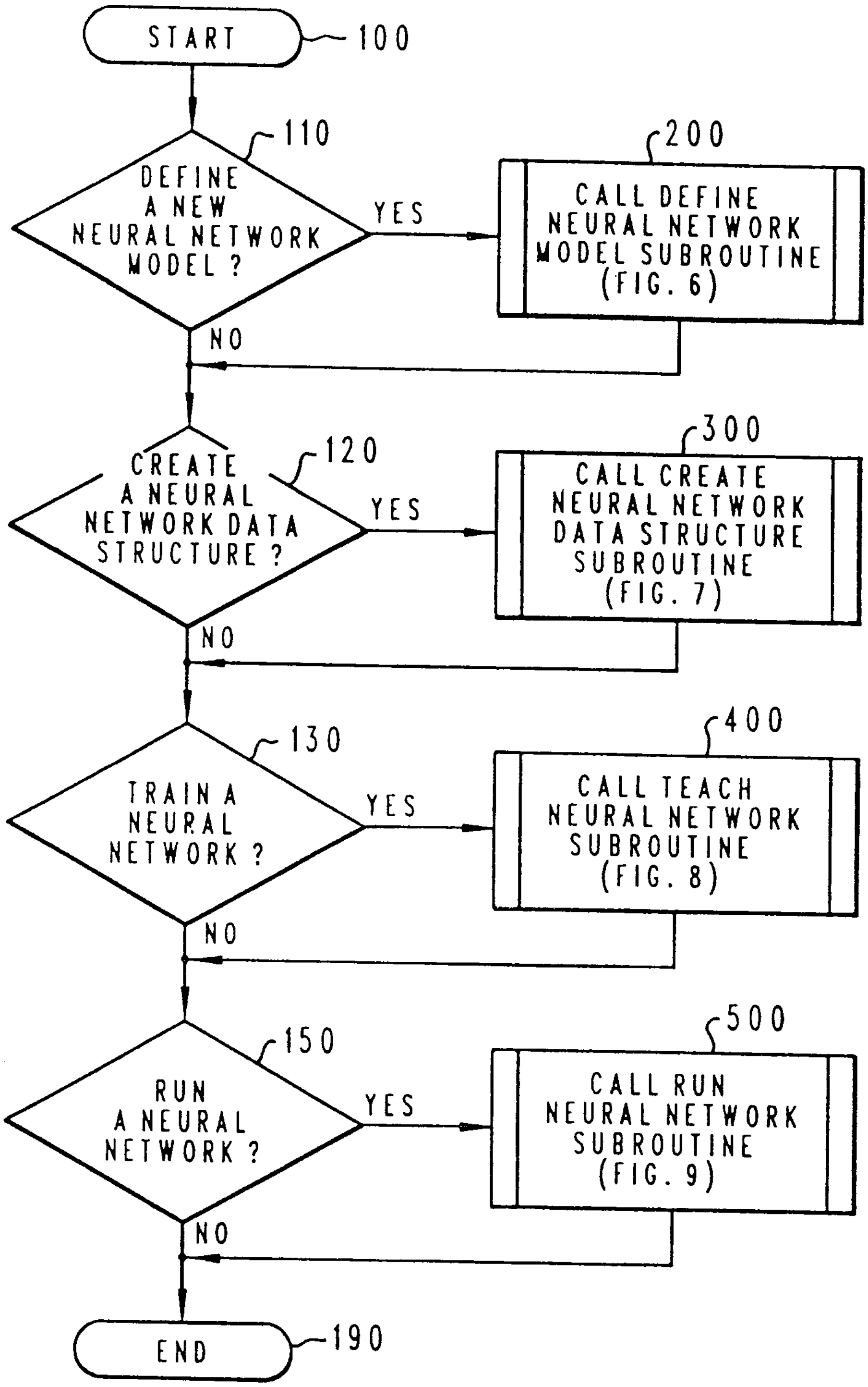
START
100
DEFINE A NEW NEURAL NETWORK MODEL ?
110
YES
CALL DEFINE NEURAL NETWORK MODEL SUBROUTINE (FIG. 6)
200
NO
CREATE A NEURAL NETWORK DATA STRUCTURE ?
120
YES
CALL CREATE NEURAL NETWORK DATA STRUCTURE SUBROUTINE (FIG. 7)
300
NO
TRAIN A NEURAL NETWORK ?
130
YES
CALL TEACH NEURAL NETWORK SUBROUTINE (FIG. 8)
400
NO
RUN A NEURAL NETWORK ?
150
YES
CALL RUN NEURAL NETWORK SUBROUTINE (FIG. 9)
500
NO
END
190

*Fig. 5*

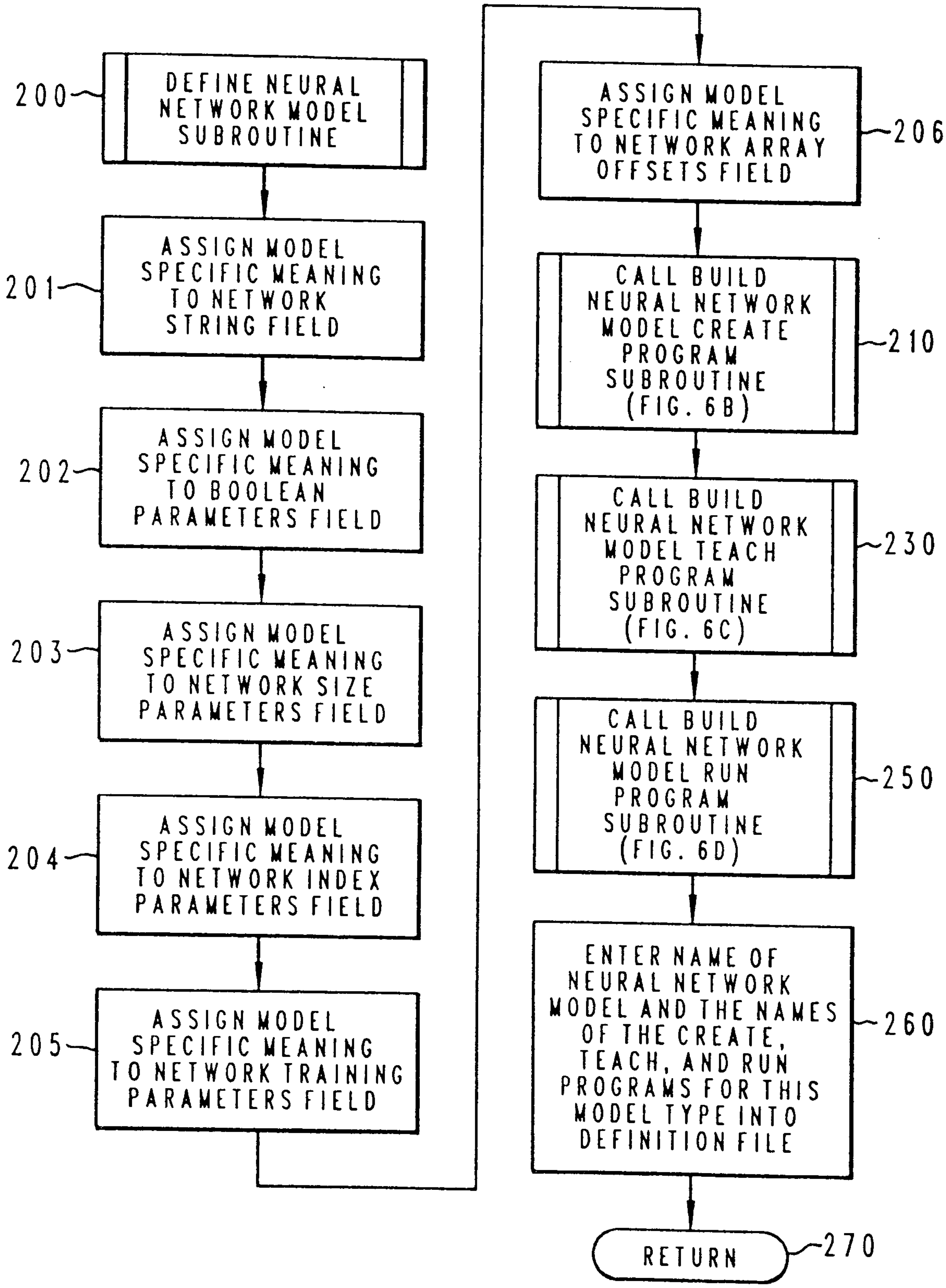
200
DEFINE NEURAL NETWORK MODEL SUBROUTINE
201
ASSIGN MODEL SPECIFIC MEANING TO NETWORK STRING FIELD
202
ASSIGN MODEL SPECIFIC MEANING TO BOOLEAN PARAMETERS FIELD
203
ASSIGN MODEL SPECIFIC MEANING TO NETWORK SIZE PARAMETERS FIELD
204
ASSIGN MODEL SPECIFIC MEANING TO NETWORK INDEX PARAMETERS FIELD
205
ASSIGN MODEL SPECIFIC MEANING TO NETWORK TRAINING PARAMETERS FIELD
206
ASSIGN MODEL SPECIFIC MEANING TO NETWORK ARRAY OFFSETS FIELD
210
CALL BUILD NEURAL NETWORK MODEL CREATE PROGRAM SUBROUTINE (FIG. 6B)
230
CALL BUILD NEURAL NETWORK MODEL TEACH PROGRAM SUBROUTINE (FIG. 6C)
250
CALL BUILD NEURAL NETWORK MODEL RUN PROGRAM SUBROUTINE (FIG. 6D)
260
ENTER NAME OF NEURAL NETWORK MODEL AND THE NAMES OF THE CREATE, TEACH, AND RUN PROGRAMS FOR THIS MODEL TYPE INTO DEFINITION FILE
270
RETURN

*Fig. 6A*

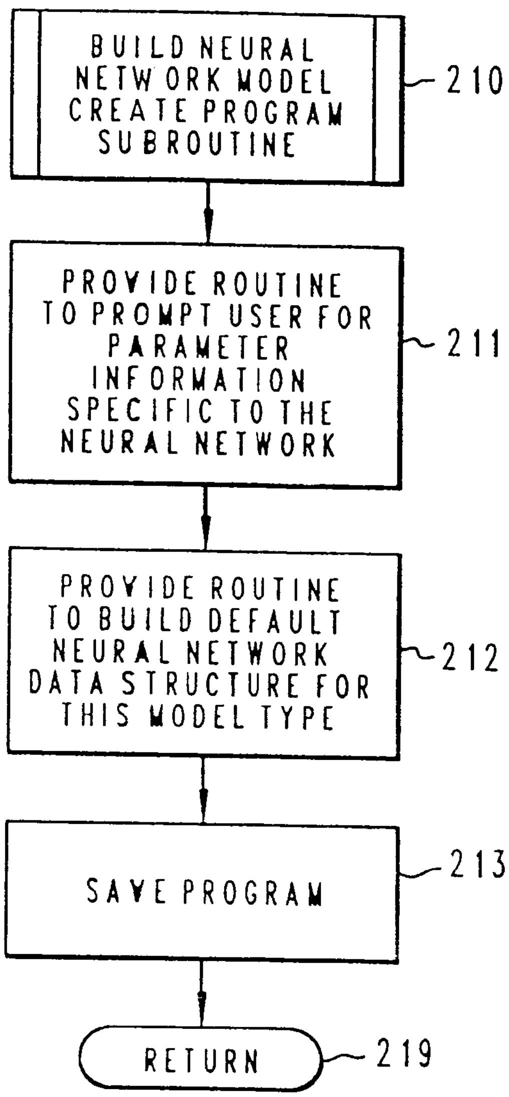
BUILD NEURAL NETWORK MODEL CREATE PROGRAM SUBROUTINE
210
PROVIDE ROUTINE TO PROMPT USER FOR PARAMETER INFORMATION SPECIFIC TO THE NEURAL NETWORK
211
PROVIDE ROUTINE TO BUILD DEFAULT NEURAL NETWORK DATA STRUCTURE FOR THIS MODEL TYPE
212
SAVE PROGRAM
213
RETURN
219

Fig. 6B

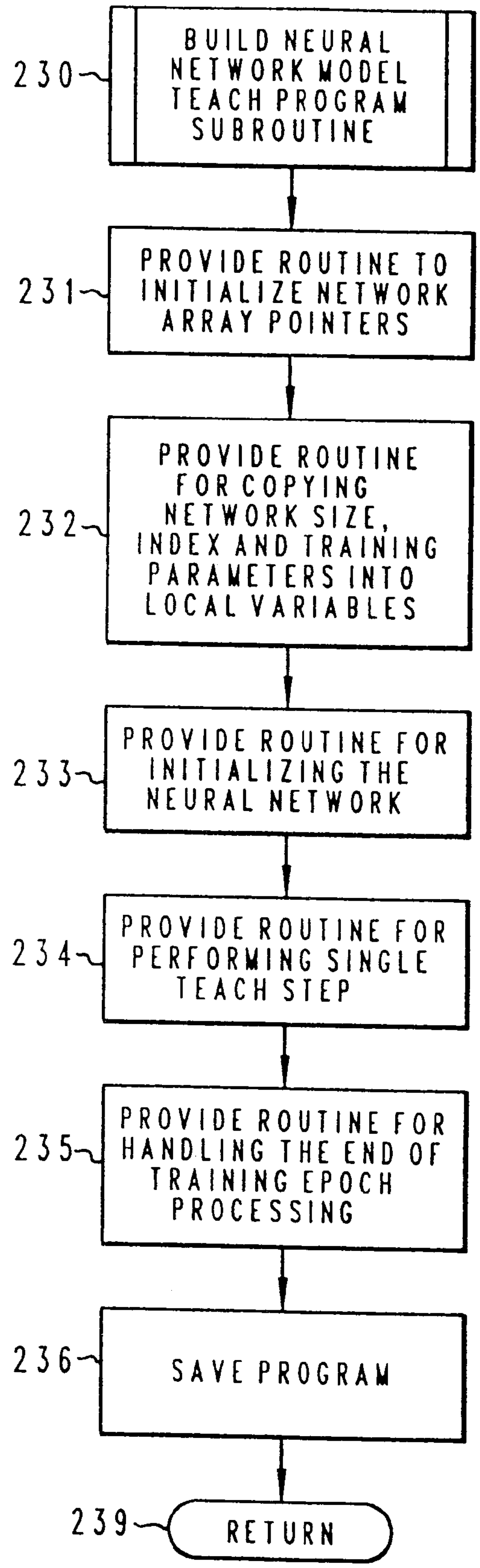
BUILD NEURAL NETWORK MODEL TEACH PROGRAM SUBROUTINE
230
PROVIDE ROUTINE TO INITIALIZE NETWORK ARRAY POINTERS
231
PROVIDE ROUTINE FOR COPYING NETWORK SIZE, INDEX AND TRAINING PARAMETERS INTO LOCAL VARIABLES
232
PROVIDE ROUTINE FOR INITIALIZING THE NEURAL NETWORK
233
PROVIDE ROUTINE FOR PERFORMING SINGLE TEACH STEP
234
PROVIDE ROUTINE FOR HANDLING THE END OF TRAINING EPOCH PROCESSING
235
SAVE PROGRAM
236
RETURN
239

Fig. 6C

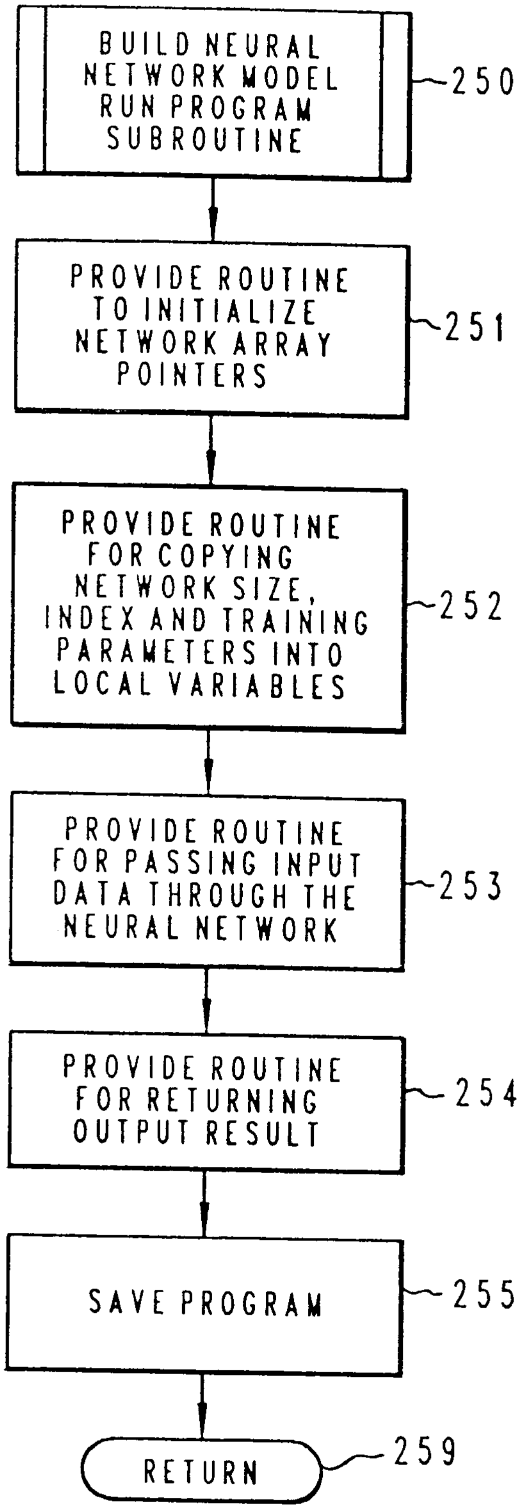
BUILD NEURAL NETWORK MODEL RUN PROGRAM SUBROUTINE
250
PROVIDE ROUTINE TO INITIALIZE NETWORK ARRAY POINTERS
251
PROVIDE ROUTINE FOR COPYING NETWORK SIZE, INDEX AND TRAINING PARAMETERS INTO LOCAL VARIABLES
252
PROVIDE ROUTINE FOR PASSING INPUT DATA THROUGH THE NEURAL NETWORK
253
PROVIDE ROUTINE FOR RETURNING OUTPUT RESULT
254
SAVE PROGRAM
255
RETURN
259

Fig. 6D

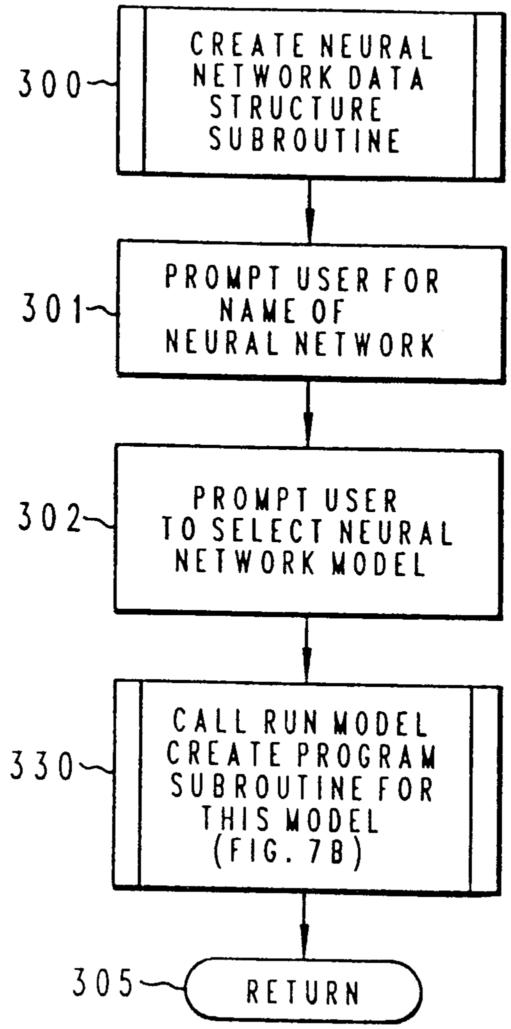
300
CREATE NEURAL NETWORK DATA STRUCTURE SUBROUTINE
301
PROMPT USER FOR NAME OF NEURAL NETWORK
302
PROMPT USER TO SELECT NEURAL NETWORK MODEL
330
CALL RUN MODEL CREATE PROGRAM SUBROUTINE FOR THIS MODEL (FIG. 7B)
305
RETURN

Fig. 7A

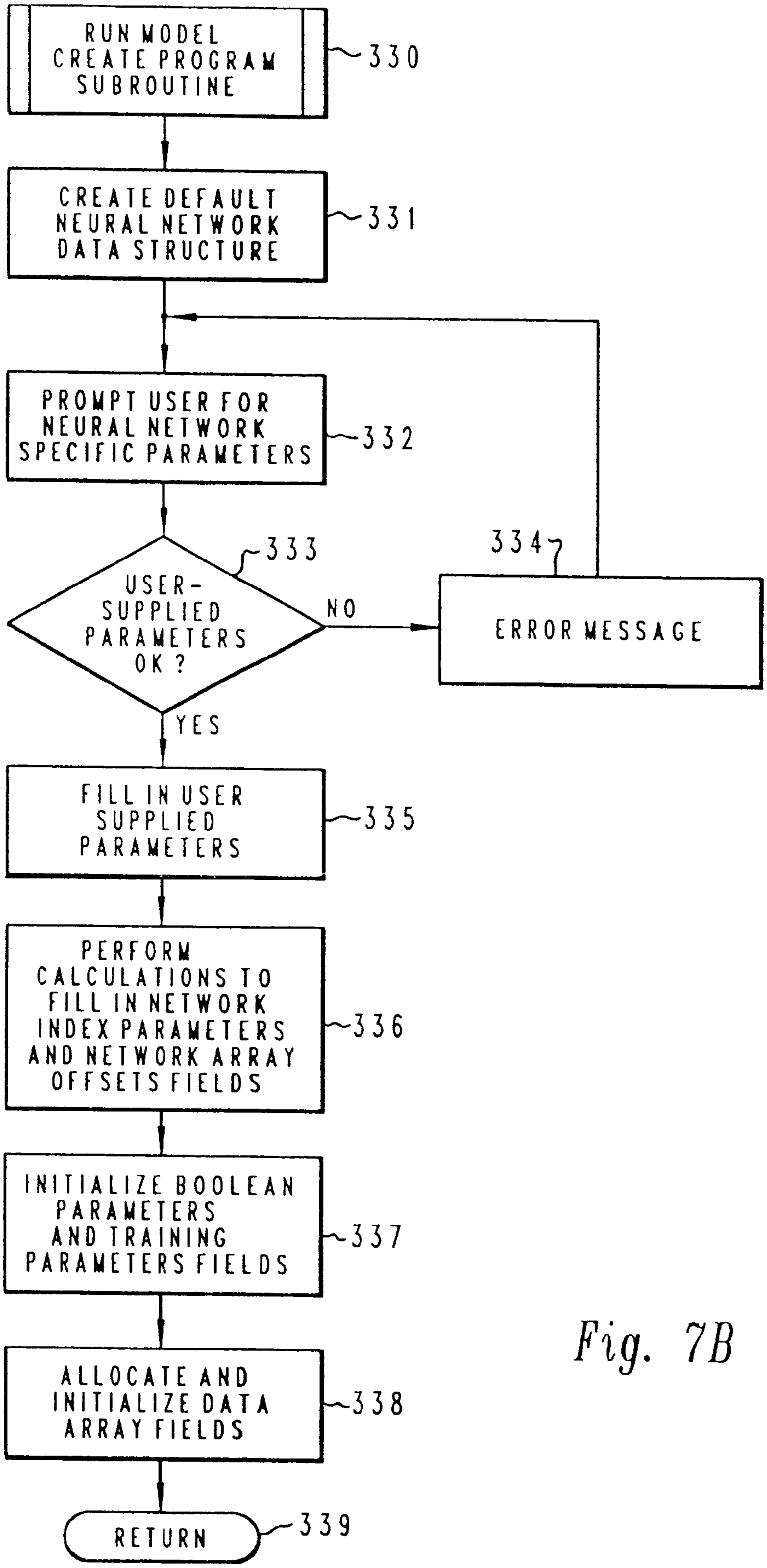
RUN MODEL CREATE PROGRAM SUBROUTINE
330
CREATE DEFAULT NEURAL NETWORK DATA STRUCTURE
331
PROMPT USER FOR NEURAL NETWORK SPECIFIC PARAMETERS
332
USER-SUPPLIED PARAMETERS OK ?
333
NO
334
ERROR MESSAGE
YES
FILL IN USER SUPPLIED PARAMETERS
335
PERFORM CALCULATIONS TO FILL IN NETWORK INDEX PARAMETERS AND NETWORK ARRAY OFFSETS FIELDS
336
INITIALIZE BOOLEAN PARAMETERS AND TRAINING PARAMETERS FIELDS
337
ALLOCATE AND INITIALIZE DATA ARRAY FIELDS
338
RETURN
339

*Fig. 7B*

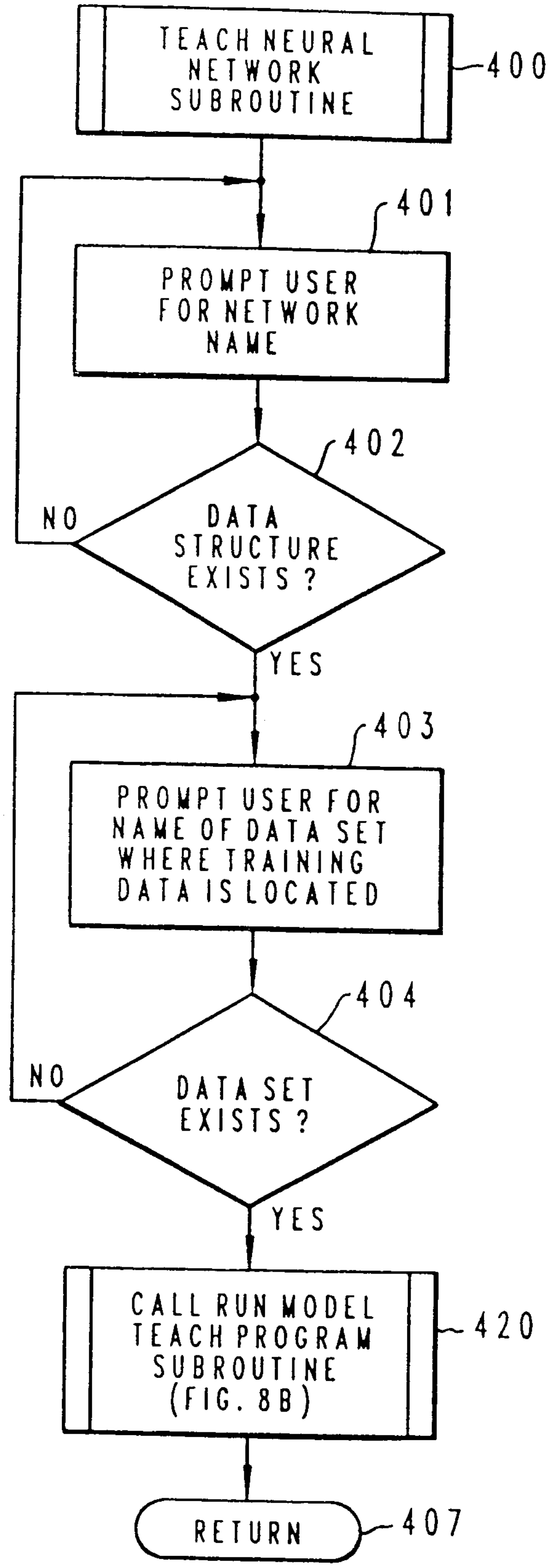
TEACH NEURAL NETWORK SUBROUTINE
400
401
PROMPT USER FOR NETWORK NAME
402
DATA STRUCTURE EXISTS ?
NO
YES
403
PROMPT USER FOR NAME OF DATA SET WHERE TRAINING DATA IS LOCATED
404
DATA SET EXISTS ?
NO
YES
CALL RUN MODEL TEACH PROGRAM SUBROUTINE (FIG. 8B)
420
RETURN
407

*Fig. 8A*

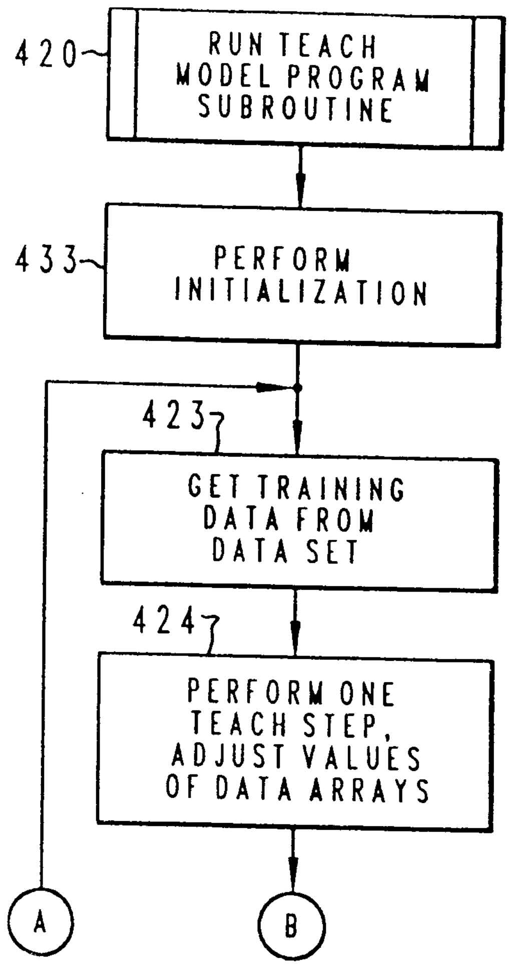
420
RUN TEACH MODEL PROGRAM SUBROUTINE
433
PERFORM INITIALIZATION
423
GET TRAINING DATA FROM DATA SET
424
PERFORM ONE TEACH STEP, ADJUST VALUES OF DATA ARRAYS
A
B

*Fig. 8B*

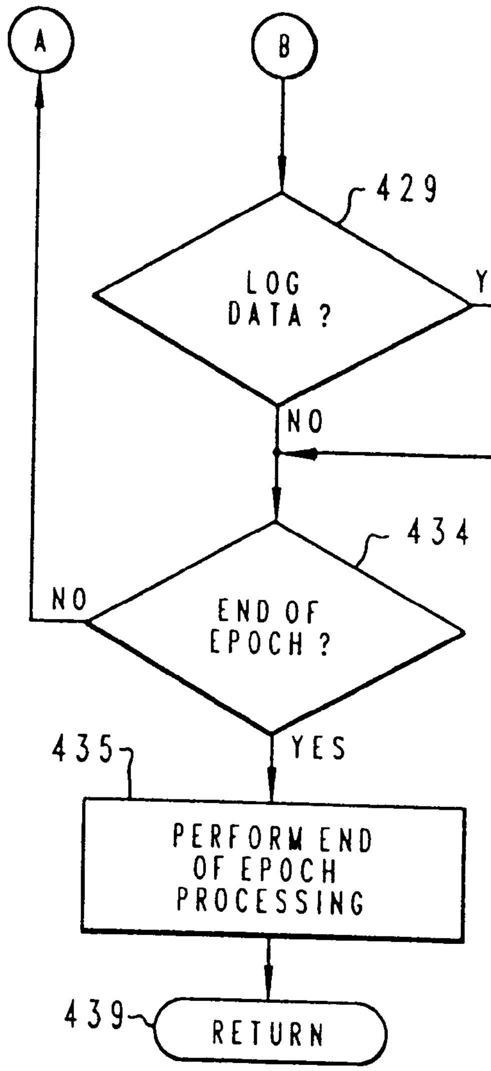

A
B
429
LOG DATA ?
YES
430
PERFORM DEFAULT LOGGING OF DATA
NO
434
END OF EPOCH ?
NO
YES
435
PERFORM END OF EPOCH PROCESSING
439
RETURN


Fig. 8C

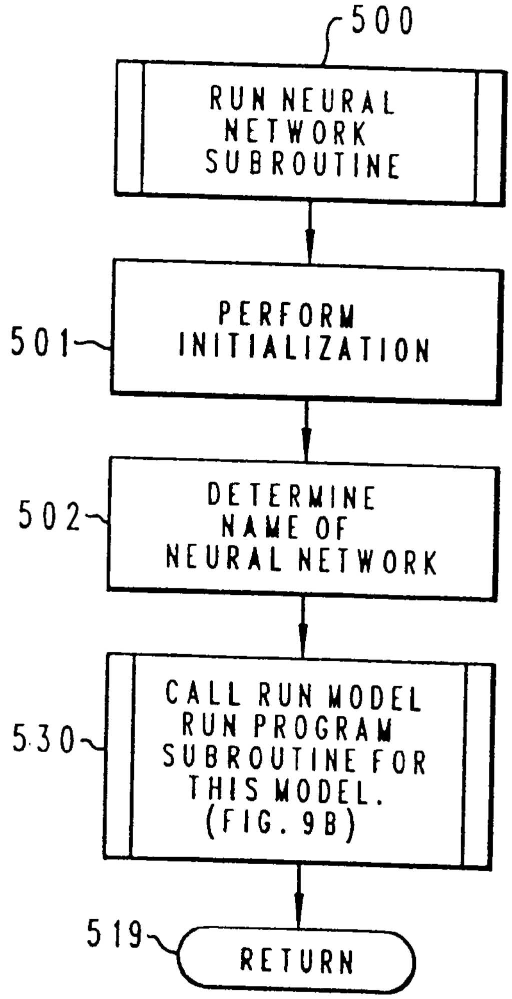

500
RUN NEURAL NETWORK SUBROUTINE
501
PERFORM INITIALIZATION
502
DETERMINE NAME OF NEURAL NETWORK
530
CALL RUN MODEL RUN PROGRAM SUBROUTINE FOR THIS MODEL. (FIG. 9B)
519
RETURN


Fig. 9A

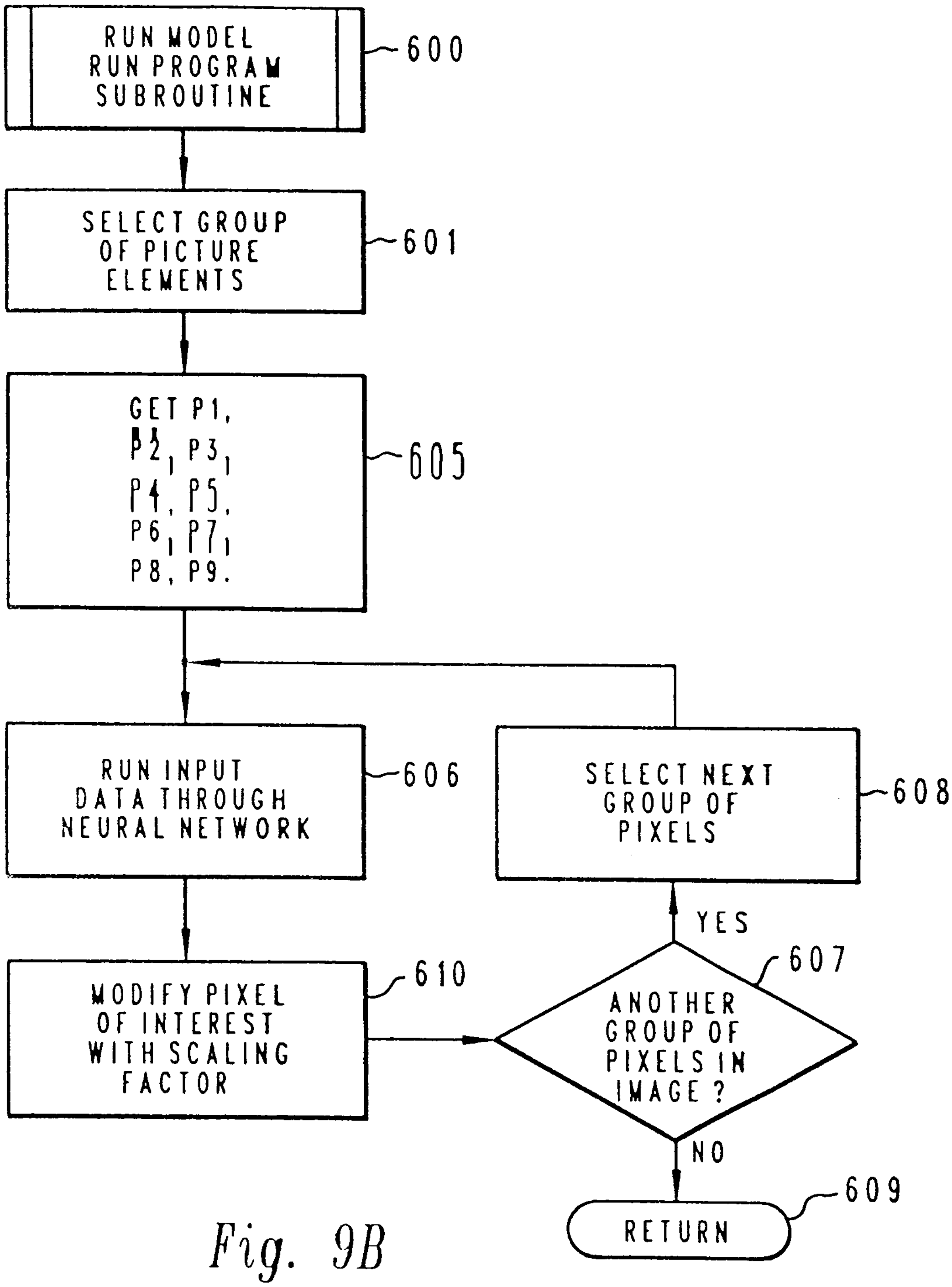
RUN MODEL
RUN PROGRAM
SUBROUTINE
600
SELECT GROUP
OF PICTURE
ELEMENTS
601
GET P1,
P2, P3,
P4, P5,
P6, P7,
P8, P9.
605
RUN INPUT
DATA THROUGH
NEURAL NETWORK
606
SELECT NEXT
GROUP OF
PIXELS
608
YES
607
MODIFY PIXEL
OF INTEREST
WITH SCALING
FACTOR
610
ANOTHER
GROUP OF
PIXELS IN
IMAGE ?
NO
609
RETURN

Fig. 9B

SAMPLE TRAINING DATA FOR NEURAL NETWORK

| P 1 | P 2 | P 3 | P 4 | P 5 | P 6 | P 7 | P 8 | P 9 | T |
|---|---|---|---|---|---|---|---|---|---|
| .066 | .066 | .066 | .066 | .066 | .066 | .066 | .066 | .066 | .066 |
| .133 | .133 | .133 | .133 | .133 | .133 | .133 | .133 | .133 | .133 |
| .2 | .2 | .2 | .2 | .2 | .2 | .2 | .2 | .2 | .2 |
| .266 | .266 | .266 | .266 | .266 | .266 | .266 | .266 | .266 | .266 |
| .333 | .333 | .333 | .333 | .333 | .333 | .333 | .333 | .333 | .333 |
| .4 | .4 | .4 | .4 | .4 | .4 | .4 | .4 | .4 | .4 |
| .466 | .466 | .466 | .466 | .466 | .466 | .466 | .466 | .466 | .466 |
| .533 | .533 | .533 | .533 | .533 | .533 | .533 | .533 | .533 | .533 |
| .6 | .6 | .6 | .6 | .6 | .6 | .6 | .6 | .6 | .6 |
| .666 | .666 | .666 | .666 | .666 | .666 | .666 | .666 | .666 | .666 |
| .733 | .733 | .733 | .733 | .733 | .733 | .733 | .733 | .733 | .733 |
| .8 | .8 | .8 | .8 | .8 | .8 | .8 | .8 | .8 | .8 |
| .866 | .866 | .866 | .866 | .866 | .866 | .866 | .866 | .866 | .866 |
| .933 | .933 | .933 | .933 | .933 | .933 | .933 | .933 | .933 | .933 |
| .000 | .000 | .933 | .933 | .000 | .933 | .933 | .933 | .933 | .666 |

WHERE

| | | |
|---|---|---|
| p1 | p2 | p3 |
| p4 | p5 | p6 |
| p7 | p8 | p9 |

p6=pixel of interest

T =training value

*Fig. 10*

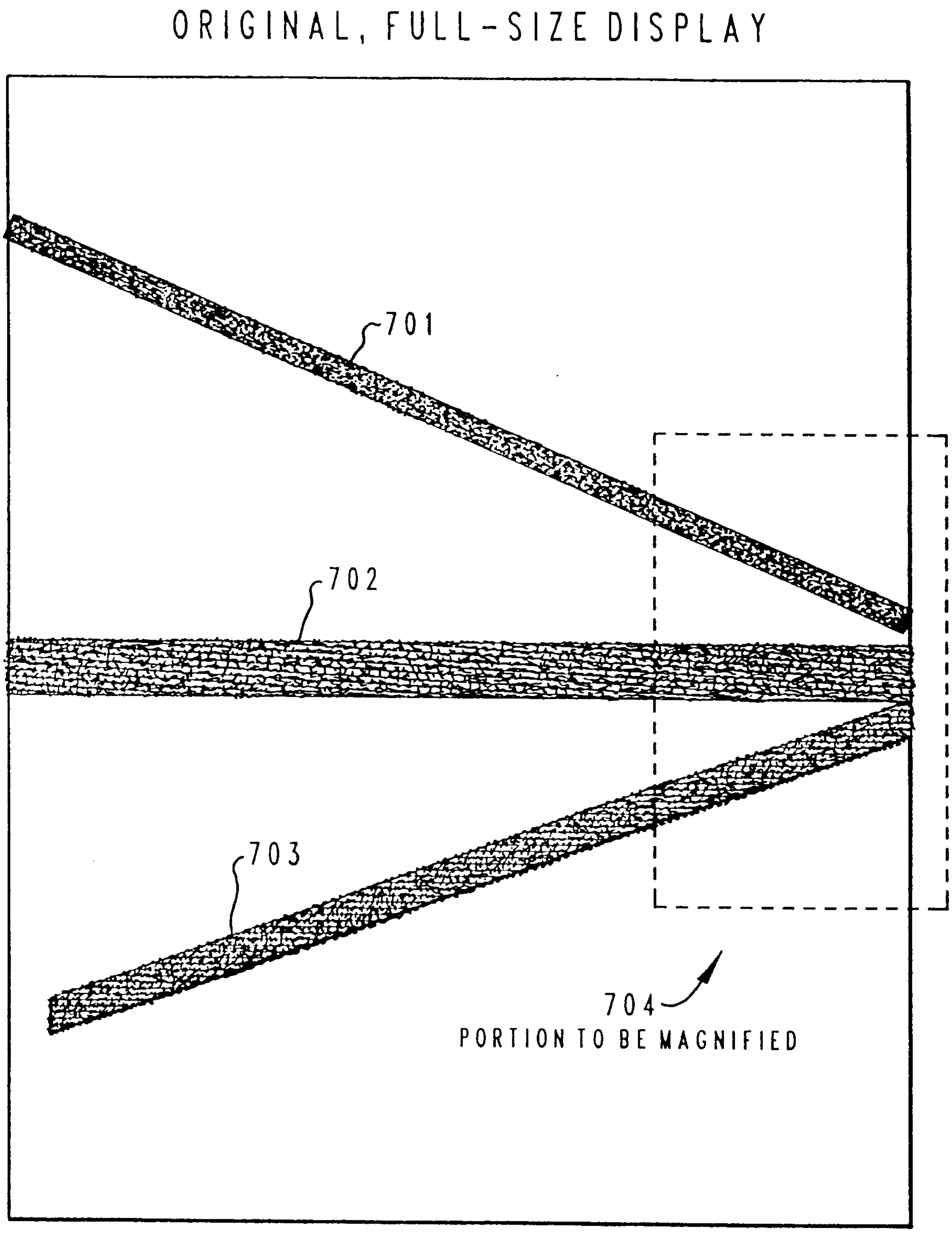
ORIGINAL, FULL-SIZE DISPLAY
701
702
703
704
PORTION TO BE MAGNIFIED

*Fig. 11*

MAGNIFIED PORTION OF DISPLAY
PRIOR TO ANTI-ALIASING

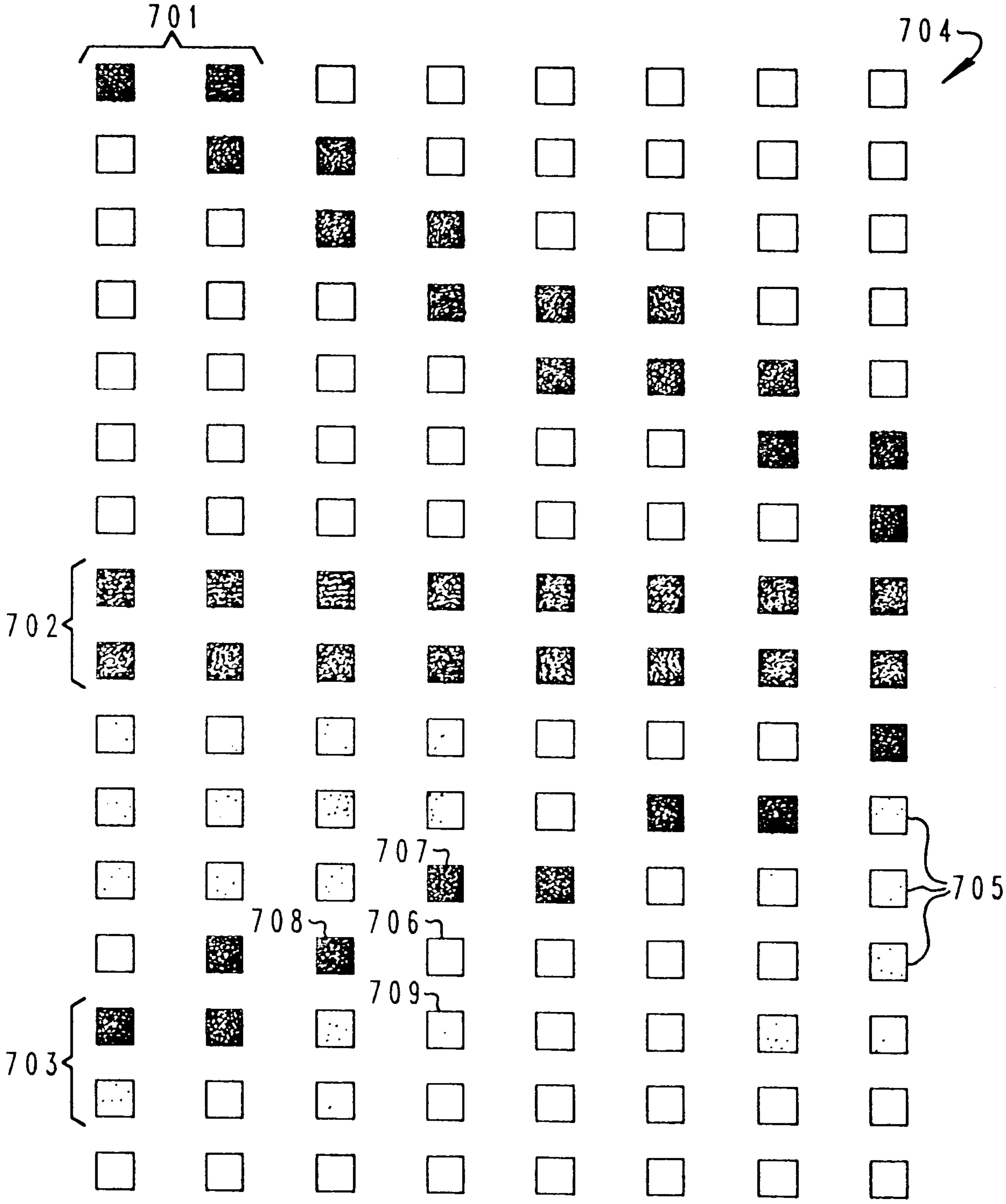


*Fig. 12*

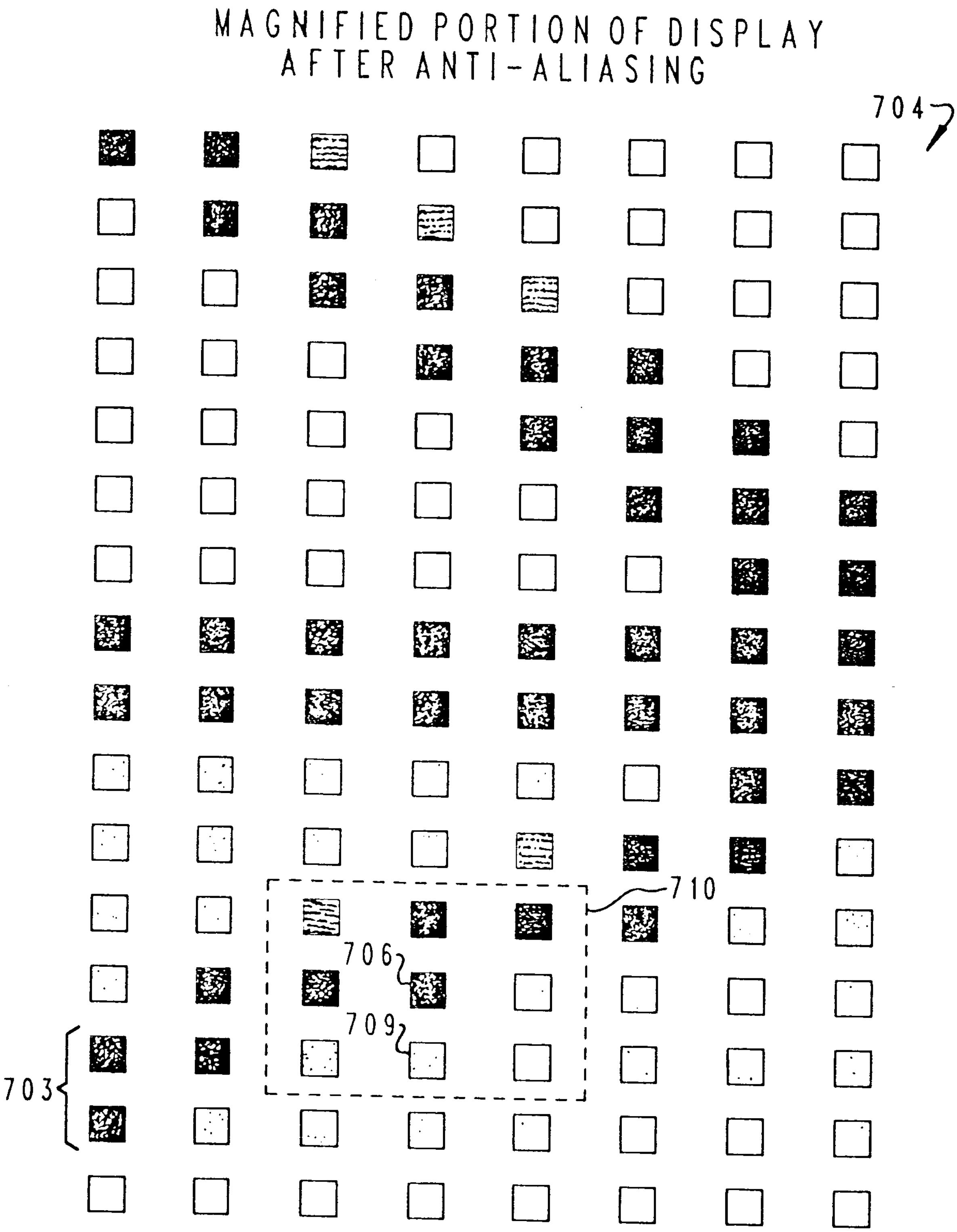
MAGNIFIED PORTION OF DISPLAY
AFTER ANTI-ALIASING
704
710
706
709
703

*Fig. 13*